# EUROPÄISCHE PATENTANMELDUNG

(11) **EP 3 817 195 A1**
(43) Veröffentlichungstag der Anmeldung: **05.05.2021**
(21) Anmeldenummer: 20203525.9
(22) Anmeldetag: 23.10.2020
(51) Int. Cl.: H02K 1/27, H02K 15/03

(54) **ROTOR FÜR EINE ELEKTRISCHE MASCHINE, ZUGEHÖRIGES HERSTELLUNGSVERFAHREN UND ELEKTRISCHE MASCHINE ZUM ANTREIBEN EINES FAHRZEUGS**

(30) Priorität: 30.10.2019 DE 102019129243
(71) Anmelder: Valeo Siemens eAutomotive Germany GmbH, 91056 Erlangen (DE)
(72) Erfinder: NEBE, Wolfgang, 91330 Eggolsheim (DE); KESSLER, Bernhard, 97705 Burkardroth (DE); BURKHARDT, Yves, 91056 Erlangen (DE)
(74) Vertreter: Dr. Gassner & Partner mbB

(57) **Zusammenfassung**

Rotor (2) für eine elektrische Maschine (1), umfassend ein Blechpaket (5), das sich in axialer Richtung erstreckende Magnettaschen (6a-6e) aufweist, mehrere erste permanentmagnetische Magnetanordnungen (7a) und mehrere zweite permanentmagnetische Magnetanordnungen (7b), wobei eine jeweilige Magnetanordnung (7a, 7b) mehrere in axialer Richtung angeordnete Magnetelemente (8a-8e, 9a-9f) umfasst, wobei in einer jeweiligen Magnettasche (6a-6e) eine der Magnetanordnungen (7a, 7e) angeordnet ist, wobei sich entlang eines jeweiligen axialen Übergangsabschnitts, in welchem sich gegenüberliegende freie Enden eines Paars benachbarter Magnetelemente (8a-8e) der ersten Magnetanordnungen (7a) befinden, ein Magnetelement (9a-9f) einer jeweiligen zweiten Magnetanordnung (7b) erstreckt.

## Beschreibung

Die vorliegende Erfindung betrifft einen Rotor für eine elektrische Maschine, umfassend ein Blechpaket, das sich in axialer Richtung erstreckende Magnettaschen aufweist, mehrere erste permanentmagnetische Magnetanordnungen und mehrere zweite permanentmagnetische Magnetanordnungen, wobei eine jeweilige Magnetanordnung mehrere in axialer Richtung angeordnete Magnetelemente umfasst, wobei in einer jeweiligen Magnettasche eine der Magnetanordnungen angeordnet ist.

Daneben betrifft die Erfindung ein Verfahren zur Herstellung eines Rotors und eine elektrische Maschine zum Antreiben eines Fahrzeugs.

Ein solcher Rotor ist beispielsweise aus dem Dokument EP 3 057 203 A1 bekannt, das einen Rotor einer permanenterregten dynamoelektrischen rotatorischen Maschine, der Permanentmagnete aufweist, die sich in teilgeschlossenen, im Wesentlichen axial verlaufenden Ausnehmungen befinden, offenbart. In den Ausnehmungen sind mehrere Permanentmagneten axial nebeneinander angeordnet.

Werden die Magnettaschen eines derartigen Rotors durch ein Harz vergossen, so dringt eine geringe Menge des Harzes zwischen Einzelbleche des Blechpakets ein und fügt so Einzelbleche des Blechpakets stoffschlüssig aneinander.

Nachteilig an einem solchen Rotor ist, dass Spalte zwischen den Einzelblechen auftreten können, weil durch mechanische Belastungen das zwischen die Einzelbleche eingetretene Hartz einreißt. Aber auch bei anderweitig zusammengesetzten Blechpaketen kann es zu einer Spaltbildung kommen. Solche Spalte führen zu einer Unwucht und können Eigenfrequenzen des Rotors reduzieren, was wiederum zu unerwünschten Geräuschen und Vibrationen beim Betrieb des Rotors bzw. einer daraus gebildeten elektrischen Maschine, führt. Dies ist gerade auf dem Gebiet der Fahrzeugantriebe unerwünscht.

Der Erfindung liegt mithin die Aufgabe zugrunde, einen mechanisch robusten Rotor bereitzustellen, der insbesondere geräusch- und vibrationsarm betreibbar ist.

Zur Lösung dieser Aufgabe ist erfindungsgemäß bei einem Rotor der eingangs genannten Art vorgesehen, dass sich entlang eines jeweiligen axialen Übergangsabschnitts, in welchem sich gegenüberliegende freie Enden eines Paars benachbarter Magnetelemente der ersten Magnetanordnungen befinden, ein Magnetelement einer jeweiligen zweiten Magnetanordnung erstreckt.

Die Erfindung beruht auf der Erkenntnis, dass Spalte zwischen Einzelblechen des Blechpakets bei herkömmlichen Rotoren typischerweise in den Übergangsbereichen auftreten, wenn die freien Enden benachbarter Magnetelemente in allen Magnettaschen an der gleichen Axialposition liegen. Dadurch ist die Stabilität des Blechpakets an dieser Stelle erheblich eingeschränkt. Die Erfindung sieht nun vor, die ersten und zweiten Magnetanordnungen so anzuordnen, dass sich die Magnetelemente der ersten Magnetanordnung einerseits und der zweiten Magnetanordnung andererseits - vereinfacht gesprochen - überlappen und so das Blechpaket stabilisieren.

So kann dem unerwünschten Phänomen der Spaltbildung im Blechpaket effektiv entgegengewirkt werden, was die mechanische Robustheit des Rotors erheblich verbessert. Dies führt gleichsam zu einer Reduktion von Geräuschen und Vibrationen beim Betrieb des Rotors, weil Unwuchten durch die Spalte effektiv reduziert oder vermieden werden. Daneben lässt sich das erfinderische Konzept des Überlappens ohne grundlegende konstruktive Änderungen bei einer Vielzahl von Rotortopologien mit permanentmagnetischen Magnetanordnungen, die mehrere Magnetelemente je Magnettasche aufweisen, aufwands- und kostenarm umsetzen.

Es wird bei dem erfindungsgemäßen Rotor bevorzugt, wenn die axialen Längen der Magnetelemente einer jeweiligen ersten Magnetanordnung gleich sind. So können für die ersten Magnetanordnungen gleichartige Magnetelemente verwendet werden, wie sie beispielsweise von herkömmlichen Rotoren bekannt sind.

Die eingangs erwähnte Überlappung lässt sich beispielsweise bei dem erfindungsgemäßen Rotor dadurch realisieren, dass die Anzahl der Magnetelemente einer jeweiligen ersten Magnetanordnung und die Anzahl der Magnetelemente einer jeweiligen zweiten Magnetanordnungen unterschiedlich, bevorzugt teilerfremd, sind.

Alternativ oder zusätzlich kann bei dem erfindungsgemäßen Rotor vorgesehen sein, dass ein auf einer Seite des Blechpakets befindliches axial äußeres Magnetelement einer jeweiligen zweiten Magnetanordnung eine andere axiale Länge als ein auf der Stirnseite des Blechpakets befindliches axial äußeres Magnetelement einer jeweiligen ersten Magnetanordnung aufweist. So lässt sich eine Überlappung dem axial äußeren Magnetelement realisieren. Zweckmäßigerweise ist die axiale Länge des axial äußeren Magnetelements kein ganzzahliges Vielfaches der Länge des axial äußeren Magnetelements der zweiten Magnetanordnung an der Stirnseite.

Gemäß einer Ausgestaltung kann vorgesehen sein, dass die axialen Längen der übrigen Magnetelemente der zweiten Magnetanordnung gleich sind.

Alternativ kann vorgesehen sein, dass ein auf der anderen Stirnseite des Blechpakets befindliches axial äußeres Magnetelement der zweiten Magnetanordnung eine andere axiale Länge als ein auf dieser Stirnseite befindliches axial äußeres Magnetelement der ersten Magnetanordnung aufweist. In Weiterbildung kann vorgesehen sein, dass die axial äußeren Magnetelemente der zweiten Magnetanordnung dieselbe axiale Länge aufweisen. Ferner kann vorgesehen sein, dass die zwischen den axial äußeren Magnetelementen der zweiten Magnetanordnung befindlichen Magnetelemente dieselbe axiale Länge aufweisen.

Bei dem erfindungsgemäßen Rotor kann bei bestimmten Ausführungsform vorgesehen sein, dass die axialen Längen der Magnetelemente einer jeweiligen zweiten Magnetanordnung gleich sind. Dies ist insbesondere vorteilhaft, wenn auch die axialen Längen der Magnetelemente einer jeweiligen ersten Magnetanordnung gleich und unterschiedlich zur axialen Länge der Magnetelemente der jeweilige zweiten Magnetanordnung sind. So kann das erfindungsgemäße Prinzip kostengünstig mit einer geringen Bauteilvielfalt realisiert werden.

Eine weitere Möglichkeit zur Realisierung des Überlappens, die alternativ oder zusätzlich zu den zuvor beschriebenen Maßnahmen vorgesehen sein kann, besteht darin, dass eine jeweilige zweite Magnetanordnung gegenüber einer jeweiligen ersten Magnetanordnung um einen axialen Abstand versetzt ist. Diese Maßnahme macht sich die Erkenntnis zu Nutze, dass Blechpakete häufig zum Ausgleich von Fertigungstoleranzen axial etwas länger als die Magnetanordnungen sind. So besteht ein einfach nutzbarer Spielraum zum Erzeugen eines axialen Versatzes zwischen den ersten Magnetanordnungen und den zweiten Magnetanordnungen. Bevorzugt ist dabei vorgesehen, dass die erste Magnetanordnung bündig mit einem axial äußeren, Ausnehmungen zum Ausbilden der Magnettaschen aufweisenden Einzelblech abschließt.

In Weiterbildung kann vorgesehen sein, dass der Rotor ferner Abstandshalter umfasst, die jeweils in einer der Magnettaschen, in welcher eine zweite Magnetanordnung angeordnet ist, angeordnet sind und den axialen Abstand realisieren. Das axial äußere Magnetelement der zweiten Magnetanordnung berührt dabei bevorzugt den Abstandshalter. Der Abstandshalter kann an einer Stirnseite des Blechpakets bündig mit einem Einzelblech, das Ausnehmungen zum Ausbilden der Magnettaschen aufweist, abschließen. Bevorzugt handelt es sich bei den Abstandshaltern um kugelförmige oder ellipsoide oder abgerundete Körper, um ein Verhaken beim Einführen in die Magnettaschen zu vermeiden.

Wie im Folgenden noch näher erläutert wird, ist es fertigungstechnisch besonders einfach zu realisieren, wenn der Abstandshalter zwischen der zweiten Magnetanordnung und einem stirnseitigen Endelement des Rotors, durch das sich die Magnettasche nicht erstreckt, angeordnet ist. Bei dem Endelement handelt es sich bevorzugt um eine Endplatte des Rotors oder ein stirnseitiges Endblech, durch das sich die Magnetaschen nicht erstrecken.

Es hat sich bei dem erfindungsgemäßen Rotor als konstruktiv zweckmäßig erwiesen, wenn ein freies Enden eines jeweiligen Magnetelements der ersten Magnetanordnung in axialer Richtung um wenigstens drei, bevorzugt wenigstens fünf, besonders bevorzugt wenigstens zehn Einzelbleche des Blechpakets von einem freien Ende eines jeweiligen Magnetelements der zweiten Magnetanordnung beabstandet ist. Alternativ oder zusätzlich kann vorgesehen sein, dass ein freies Enden eines jeweiligen Magnetelements der ersten Magnetanordnung in axialer Richtung um wenigstens 1 mm, bevorzugt, wenigstens 1,5 mm, besonders bevorzugt wenigstens 3 mm von einem freien Ende eines jeweiligen Magnetelements der zweiten Magnetanordnung beabstandet ist.

Bei einer elektromagnetisch vorteilhaften Ausgestaltung des erfindungsgemäßen Rotors ist vorgesehen, dass die Magnettaschen mehrere Magnettaschenanordnungen ausbilden, wobei jede Magnettaschenanordnung eine erste Magnettasche und eine zweite Magnettasche umfasst, die in einer radial nach außen geöffneten V-Form zueinander auf beiden Seiten einer Trennungsebene, die Schenkel der V-Form trennt und sich in radialer und axialer Richtung erstreckt, angeordnet sind.

Die elektromagnetischen Eigenschaften lassen sich insbesondere durch eine sogenannte Doppel-V-Anordnung verbessern, die sich dadurch auszeichnet, dass eine jeweilige Magnettaschenanordnung ferner eine dritte Magnettasche und eine vierte Magnettasche umfasst, die in einer radial nach außen geöffneten V-Form zwischen beiden Schenkeln der V-Form der ersten Magnettasche und der zweiten Magnettasche anordnet sind, wobei die erste Magnettasche und die dritte Magnettasche auf einer Seite der Trennungsebene und die zweite Magnettasche und die vierte Magnettasche auf der anderen Seite der Trennungsebene angeordnet sind.

Hinsichtlich der Positionen der Magnetanordnungen kann dabei beispielsweise vorgesehen sein, dass in der dritten Magnettasche eine erste Magnetanordnung angeordnet ist und in der vierten Magnettasche eine zweite Magnetanordnung angeordnet ist, oder dass in der dritten Magnettasche eine zweite Magnetanordnung angeordnet ist und in der vierten Magnettasche eine erste Magnetanordnung angeordnet ist.

Es kann grundsätzlich vorgesehen sein, dass in der ersten Magnettasche eine erste Magnetanordnung angeordnet ist und in der zweiten Magnettasche eine zweite Magnetanordnung angeordnet ist, oder dass in der ersten Magnettasche eine zweite Magnetanordnung angeordnet ist und in der zweiten Magnettasche eine erste Magnetanordnung angeordnet ist.

Gemäß einer alternativen Ausgestaltung ist vorgesehen, dass in der ersten Magnettasche und der zweiten Magnettasche jeweils eine erste Magnetanordnung angeordnet ist und in der dritten Magnettasche und der vierten Magnettasche jeweils eine zweite Magnetanordnung angeordnet ist, oder dass in der ersten Magnettasche und der zweiten Magnettasche jeweils eine zweite Magnetanordnung angeordnet ist und in der dritten Magnettasche und der vierten Magnettasche jeweils eine erste Magnetanordnung angeordnet ist.

Es liegt auch im Rahmen der Erfindung, wenn eine jeweilige Magnettaschenanordnung eine weitere Magnettasche umfasst, welche vorzugsweise die Trennungsebene schneidet. Typischerweise ist die weitere Magnettasche senkrecht zu einem Radius des Blechpakets und/oder senkrecht zur Trennungsebene ausgebildet. Im Zusammenwirken mit der V-Form wird dann auch von einer Delta-Form oder Delta-Anordnung gesprochen.

Dabei kann in der weiteren Magnettasche grundsätzlich eine erste Magnetanordnung oder eine zweite Magnetanordnung angeordnet sein. Es ist auch möglich, dass in der weiteren Magnettasche eine erste Magnetanordnung angeordnet ist und in den übrigen Magnettaschen der Magnettaschenanordnung eine zweite Magnetanordnung angeordnet ist, oder dass in der weiteren Magnettasche eine zweite Magnetanordnung angeordnet ist und in den übrigen Magnettaschen der Magnettaschenanordnung eine erste Magnetanordnung angeordnet ist.

Typischerweise ist vorgesehen, dass eine jeweilige Magnettaschenanordnung in einem von wenigstens vier das Blechpaket gleichmäßig unterteilenden Sektoren des Blechpakets angeordnet ist. Dabei kann die Anzahl von Sektoren der Anzahl von Rotorpolen entsprechen und insbesondere sechs, acht, zehn oder zwölf betragen.

Die Anordnung der Magnetanordnungen bevorzugt in jeder Magnettaschenanordnung gleich. Es kann aber auch vorgesehen sein, dass sich erste Magnettaschenanordnungen und zweite Magnettaschenanordnungen mit einer gegenüber den ersten Magnettaschenanordnungen unterschiedlichen Anordnung der Magnetanordnungen in Umfangsrichtung abwechseln. Dabei ist es möglich, dass in den Magnettaschen der ersten Magnettaschenanordnung nur erste Magnetanordnungen und in den Magnettaschen der zweiten Magnettaschenanordnung nur zweite Magnetanordnungen angeordnet sind.

Mit Vorteil ist bei dem erfindungsgemäßen Rotor ferner vorgesehen, dass in einer jeweiligen Magnettasche ein Fügemittel angeordnet ist, das die in der Magnettasche angeordnete Magnetanordnung zumindest abschnittsweise umgibt und/oder sich zwischen die Einzelbleche erstreckt, wobei das Fügemittel benachbarte Einzelbleche miteinander und/oder die Magnetanordnung mit den Einzelblechen stoffschlüssig verfügt und/oder benachbarte Einzelbleche miteinander stoffschlüssig verfügt. Das Fügemittel ist typischerweise ein Harz.

Die der Erfindung zu Grunde liegende Aufgabe wird ferner gelöst durch ein Verfahren zur Herstellung eines Rotors, insbesondere eines erfindungsgemäßen Rotors, umfassend folgende Schritte: Bereitstellen eines Blechpakets mit mehreren sich in axialer Richtung erstreckenden Magnettaschen; Anordnen von Magnetelementen innerhalb der Magnettaschen in axialer Richtung derart, dass mehrere permanentmagnetische Magnetanordnungen ausgebildet werden und dass sich entlang eines jeweiligen axialen Übergangsabschnitts, in welchem sich gegenüberliegende freie Enden eines Paars benachbarter Magnetelemente der ersten Magnetanordnungen befinden, ein Magnetelement einer jeweiligen zweiten Magnetanordnung erstreckt.

Dabei kann vorgesehen sein, dass in die oder eine jeweiligen zum Aufnehmen der zweiten Magnetanordnung vorgesehenen Magnettasche ein Abstandshalter angeordnet wird, das an einer Stirnseite des Blechpakets abgestützt wird, um einen axialen Versatz zwischen der ersten und der zweiten Magnetanordnung zu erzeugen.

Gemäß einer Weiterbildungsalternative ist dabei vorgesehen, dass ein Werkzeug verwendet wird, mit welchem der Abstandshalter fest verbunden ist, wobei das Werkzeug die Magnettaschen stirnseitig abdichtet. Das Blechpaket wird beispielsweise auf dem Werkzeug angeordnet und mit den Magnetelementen befüllt. Für jede Magnettasche zum Aufnehmen einer zweiten Magnetanordnung weist das Werkzeug dabei einen in die Magnettasche hineinragenden Abstandshalter auf. Nach einer Fixierung der Magnetelemente mit dem Blechpaket kann das Werkzeug samt Abstandshalter entfernt werden.

Gemäß einer anderen Weiterbildungsalternative ist vorgesehen, dass der Abstandshalter auf einem Endelement, durch das sich keine Magnettasche erstreckt, des Rotors positioniert wird, wobei vorzugsweise als Endelement ein stirnseitiges Endblech des Blechpakets oder eine stirnseitig auf dem Blechpaket angeordnete Endplatte verwendet wird. In diesem Fall kann für jede Magentasche zum Aufnehmen einer zweiten Magnetanordnung ein Abstandshalter in die Magnettasche eingeführt werden. Die Abstandshalter verbleiben nach einer Fixierung typischerweise im Rotor.

Es ist bei dem erfindungsgemäßen Verfahren ferner von Vorteil, wenn es ferner folgende Schritt umfasste: Einbringen eines Fügemittels in die Magnettaschen; und stoffschlüssiges Verfügen benachbarter Einzelbleche miteinander und/oder einer jeweiligen Magnetanordnung mit den Einzelblechen durch das Fügemittel. Das Einbringen erfolgt bevorzugt durch Gießen. Als Fügemittel wird zweckmäßigerweise ein Harz verwendet. Es wird ferner bevorzugt, wenn das Einbringen des Fügemittels vor dem Anordnen der Magnetelemente in die Magnettaschen erfolgt. Dies vereinfacht die Umschließung der Magnetelemente durch das Fügemittel und sorgt für eine gute Stabilität. Es ist aber auch denkbar, dass zunächst die Magnetelemente in den Magnettaschen angeordnet werden und danach das Fügemittel eingebracht wird.

Im Übrigen lassen sich sämtliche Ausführungen zum erfindungsgemäßen Rotor auf das erfindungsgemäße Verfahren übertragen, sodass auch mit diesem die zuvor genannten Vorteile erzielt werden können. Insbesondere können die im Hinblick auf den Rotor beschriebenen Magnetelemente im Rahmen des Herstellungsverfahrens zum Ausbilden der ersten Magnetanordnung bzw. der zweiten Magnetanordnung verwendet werden.

Die der Erfindung zugrunde liegende Aufgabe wird auch durch eine elektrische Maschine zum Antreiben eines Fahrzeugs gelöst, umfassend einen erfindungsgemäßen Rotor oder einen durch das erfindungsgemäße Verfahren erhaltenen Rotor. Der Rotor ist drehbar bezüglich des Stators gelagert.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiels der erfindungsgemäßen elektrischen Maschine mit einem ersten Ausführungsbeispiel des erfindungsgemäßen Rotors;
- Fig. 2: eine stirnseitige Ansicht des Rotors gemäß dem ersten Ausführungsbeispiel;
- Fig. 3: eine Prinzipskizze der Anordnung erster und zweiter Magnetanordnungen bei einem zweiten Ausführungsbeispiel des erfindungsgemäßen Rotors;
- Fig. 4: eine Prinzipskizze der Anordnung erster und zweiter Magnetanordnungen bei einem dritten Ausführungsbeispiel des erfindungsgemäßen Rotors;
- Fig. 5: eine Prinzipskizze eines vierten Ausführungsbeispiels des erfindungsgemäßen Rotors;
- Fig. 6: eine Prinzipskizze eines fünften Ausführungsbeispiels des erfindungsgemäßen Rotors;
- Fig. 7: eine stirnseitige Ansicht eines sechsten Ausführungsbeispiels des erfindungsgemäßen Rotors; und
- Fig. 8: eine stirnseitige Ansicht einer Magnettaschenanordnung bei einem siebten Ausführungsbeispiel des erfindungsgemäßen Rotors.

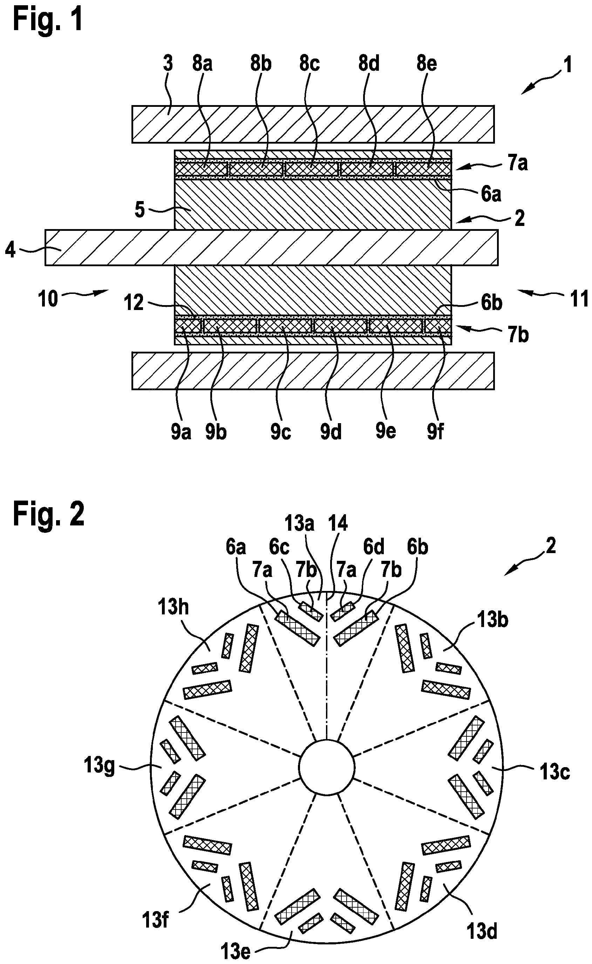

Fig. 1 ist eine Prinzipskizze eines Ausführungsbeispiels einer elektrischen Maschine 1 mit einem ersten Ausführungsbeispiel eines Rotors 2.

Die elektrische Maschine 1 ist eine permanenterregte Synchronmaschine und weist ferner einen Stator 3 und eine Welle 4 auf. Der Rotor 2 ist drehbar innerhalb des Stators 3 gelagert und drehfest mittels eines Presssitzes oder eines Formschlusses mit der Welle 4 verbunden.

Das erste Ausführungsbeispiel des Rotors 2 umfasst ein Blechpaket 5, das aus einer Vielzahl von axial geschichteten Einzelblechen, die aus Gründen der Übersichtlichkeit nicht genauer dargestellt sind, gebildet ist. Das Blechpaket 5 weist mehrere sich in axialer Richtung erstreckende erste Magnettaschen 6a und zweite Magnettaschen 6b sowie in Fig. 1 nicht sichtbare dritte Magnettaschen 6c, 6d (siehe Fig. 2) auf, die durch deckungsgleich angeordnete Ausnehmungen in den Einzelblechen ausgebildet sind.

Innerhalb der ersten Magnettaschen 6a ist jeweils eine erste permanentmagnetische Magnetanordnung 7a angeordnet und innerhalb der zweiten Magnettaschen 6b ist jeweils eine zweite permanentmagnetische Magnetanordnung 7b angeordnet. Die Magnetanordnungen 7a, 7b umfassen jeweils mehrere Magnetelemente 8a-8e, 9a-9f die in axialer Richtung innerhalb der entsprechenden Magnettasche 6a, 6b angeordnet sind.

Die Magnetelemente 8a-8e, 9a-9f sind dabei derart angeordnet, dass entlang eines jeweiligen axialen Übergangsabschnitts, in welchem sich gegenüberliegende freie Enden eines Paars benachbarter Magnetelemente 8a-8e der ersten Magnetanordnung 7a befinden, ein Magnetelement 9a-9f einer jeweiligen zweiten Magnetanordnung 7b erstreckt. Es ist mithin eine Überlappung zwischen den Magnetelementen 8a-8e der ersten Magnetanordnung und den Magnetelementen 9a-9f der zweiten Magnetanordnung 7b realisiert.

Zur Erzeugung dieser Überlappung sind axiale Längen der, exemplarisch fünf, Magnetelemente 8a-8e der ersten Magnetanordnung 7a gleich. Bei der zweiten Magnetanordnung 7b sind exemplarisch sechs Magnetelemente 9a-9f vorgesehen. Dabei weist das auf einer Stirnseite 10 des Blechpakets 5 befindliche axial äußeres Magnetelement 9a der zweiten Magnetanordnung 7b eine kürzere axiale Länge als das auf der Stirnseite 10 befindliche axial äußere Magnetelement 8a der ersten Magnetanordnung 7a auf. Ebenso weist auf der anderen Stirnseite 11 des Blechpakets 5 befindliche axial äußeres Magnetelement 9f der zweiten Magnetanordnung 7b eine kürzere axiale Länge als das auf der Stirnseite 11 befindliche axial äußere Magnetelement 8e der ersten Magnetanordnung 7a auf. Die axialen Längen der übrigen Magnetelemente 9b-9e der zweiten Magnetanordnung 7b haben gleiche axiale Längen, die der axialen Länge eines jeweiligen Magnetelements 8a-8e der ersten Magnetanordnung 7a entspricht.

Aus Fig. 1 ist ferner ersichtlich, dass in einer jeweiligen Magnettasche 6a-d ein Fügemittel 12 in Form eines Harzes angeordnet ist, das die in der Magnettasche 6a-d angeordnete Magnetanordnung 7a, 7b zumindest abschnittsweise umgibt und sich zwischen die Einzelbleche erstreckt. Das Fügemittel 12 verfügt dabei sowohl benachbarte Einzelbleche miteinander als auch die Magnetanordnung 7a, 7b mit dem Blechpaket 5 und benachbarte Einzelbleche miteinander stoffschlüssig.

Fig. 2 ist eine stirnseitige Ansicht des Rotors 2.

Die Magnettaschen 6a-d bilden mehrere gleichartige Magnettaschenanordnungen 13a-13h aus, die jeweils in einem von mehreren Sektoren angeordnet sind. Die Sektoren unterteilenden das Blechpaket 5 gleichmäßig. Die Anzahl der Sektoren entspricht dabei der Anzahl von Rotorpolen des Rotor 2, die vorliegend exemplarisch acht beträgt.

Jede Magnettaschenanordnung 13a-13h umfasst eine der ersten Magnettaschen 6a und eine der zweiten Magnettasche 6b, die in einer radial nach außen geöffneten V-Form zueinander auf beiden Seiten einer Trennungsebene 14, die Schenkel der V-Form trennt und sich in radialer und axialer Richtung erstreckt, angeordnet sind. Die Magnettaschen 6a, 6b sind symmetrisch bezüglich der Trennungsebene 14 angeordnet. Außerdem umfasst jede Magnettaschenanordnung eine der dritten Magnettaschen 6c und eine der vierten Magnettaschen 6d, die in einer radial nach außen geöffneten V-Form zwischen beiden Schenkeln der V-Form der ersten und zweiten Magnettasche 6a, 6b anordnet sind, wobei die erste Magnettasche 6a und die dritte Magnettasche 6c auf einer Seite der Trennungsebene 14 und die zweite Magnettasche 6b und die vierte Magnettasche 6d auf der anderen Seite der Trennungsebene 14 angeordnet sind. Dadurch wird eine sog. "Doppel-V-Anordnung" realisiert.

In einer jeweiligen Magnettaschenanordnung 13a-13h sind in der ersten Magnettasche 6a eine erste Magnetanordnung 7a, in der zweiten Magnettasche 6b eine zweite Magnetanordnung 7b, in der dritten Magnettasche 6c eine zweite Magnetanordnung 7b und in der vierten Magnettasche 6d eine erste Magnetanordnung 7a angeordnet.

Gemäß einem weiteren Ausführungsbeispiel sind in der ersten Magnettasche 6a und in der zweiten Magnettasche 6b jeweils eine erste Magnetanordnung 7a und in der dritten Magnettasche 6c und in der vierten Magnettasche 6d jeweils eine zweite Magnetanordnung 7b angeordnet.

Gemäß einem weiteren Ausführungsbeispiel sind in der ersten Magnettasche 6a und in der zweiten Magnettasche 6b jeweils eine zweite Magnetanordnung 7b und in der dritten Magnettasche 6c und in der vierten Magnettasche 6d jeweils eine erste Magnetanordnung 7a angeordnet.

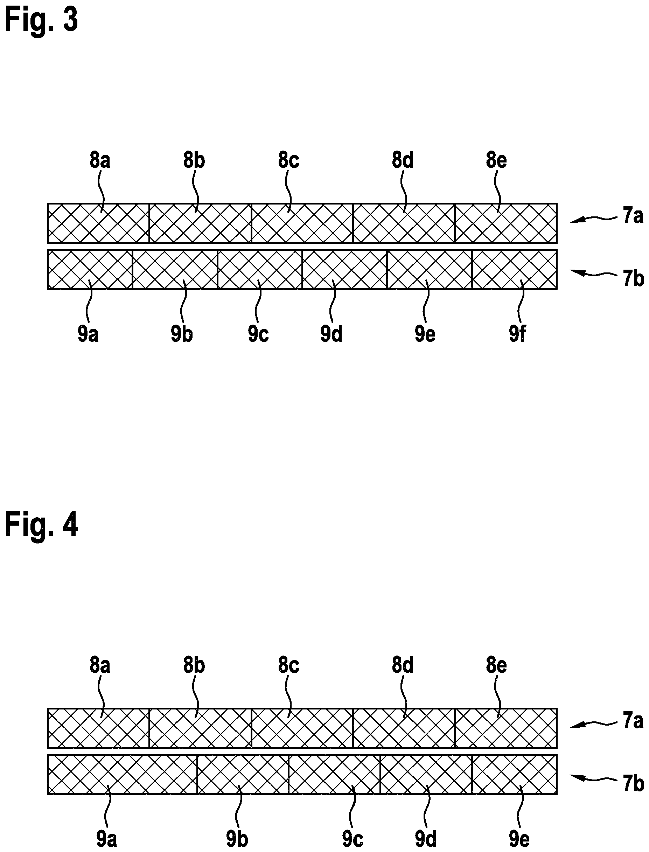

Fig. 3 ist eine Prinzipskizze der Anordnung der ersten und zweiten Magnetanordnung 7a, 7b bei einem zweiten Ausführungsbeispiel eines Rotors 2, welches im Übrigen einem der der im Zusammenhang mit Fig. 1 und Fig. 2 beschriebenen Ausführungsbeispiele entspricht.

Das zweite Ausführungsbeispiel unterscheidet sich vom ersten Ausführungsbeispiel dadurch, dass die axialen Längen der Magnetelemente 9a-9f der zweiten Magnetanordnung 7b gleich sind. Um die Überlappung zu realisieren ist jedoch darauf zu achten, dass die Anzahl der Magnetelemente 8a-e und der Magnetelemente 9a-9f teilerfremd sind.

Fig. 4 ist eine Prinzipskizze der Anordnung der ersten und zweiten Magnetanordnung 7a, 7b bei einem dritten Ausführungsbeispiel eines Rotors 2, welches im Übrigen einem der im Zusammenhang mit Fig. 1 und Fig. 2 beschriebenen Ausführungsbeispiele entspricht.

Das dritte Ausführungsbeispiel unterscheidet sich vom ersten Ausführungsbeispiel dadurch, dass das axial äußere Magnetelement 9a eine größere axiale Länge als die übrigen Magnetelemente 9b-9e aufweist und deren axiale Längen gleich sind.

So lässt sich auch mit gleicher Anzahl von Magnetelementen 8a-e einerseits und von Magnetelementen 9a-e andererseits die Überlappung realisieren. Selbstverständlich ist es gemäß einem weiteren Ausführungsbeispiel auch denkbar, dass das axial äußere Magnetelement 9a eine kleinere axiale Länge als die übrigen Magnetelemente 9b-9e aufweist.

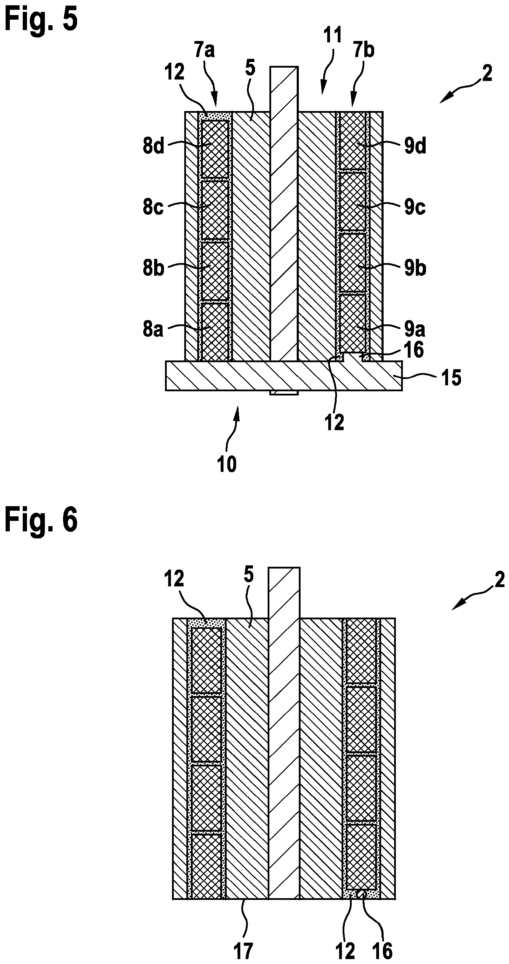

Fig. 5 ist eine Prinzipskizze eines vierten Ausführungsbeispiels eines Rotors 2. Fig. 5 zeigt ferner ein Werkzeug 15, welches nicht Teil des Rotors 2 ist und im Zusammenhang mit der Herstellung des Rotors 2 später erläutert wird.

Bei diesem Ausführungsbeispiel weisen die erste Magnetanordnung 7a und die zweite Magnetanordnung die gleiche Anzahl von Magnetelementen 8a-8d, 9a-9d, die vorliegend exemplarisch vier beträgt, auf. Alle Magnetelemente 8a-8d, 9a-9d haben die gleiche axiale Länge. Die Überlappung wird bei diesem Ausführungsbeispiel dadurch realisiert, dass eine jeweilige zweite Magnetanordnung 7b gegenüber einer jeweiligen ersten Magnetanordnung 7a um einen axialen Abstand versetzt ist.

Dabei schließt das axial äußere Magnetelement 8a der ersten Magnetanordnung 7a an der Stirnseite 10 im Wesentlichen bündig mit dem axial äußeren Einzelblech, das eine Ausnehmung aufweist, ab, wohingegen das Blechpaket 5 an der anderen Stirnseite 11 eine Überstand gegenüber dem anderen axial äußeren Magnetelement 8d aufweist. Bei der zweiten Magnetanordnung 7b schließt das axial äußere Magnetelemente 9d an der Stirnseite 11 im Wesentlichen bündig mit dem axial äußeren Einzelblech, das eine Ausnehmung aufweist, ab, wohingegen das Blechpaket 5 an der anderen Stirnseite 10 eine Überstand gegenüber dem anderen axial äußeren Magnetelement 9a aufweist.

Fig. 6 ist eine Prinzipskizze eines fünften Ausführungsbeispiels eines Rotors 2, welches bis auf die im Folgenden beschriebenen Abweichungen dem vierten Ausführungsbeispiel entspricht.

Bei diesem Ausführungsbeispiel ist die zweite Magnetanordnung 7b gegenüber der ersten Magnetanordnung 7a durch einen in eine jeweilige Magnettasche, in welcher eine der zweiten Magnetanordnung 7b aufgenommen ist, angeordneten Abstandshalter 16 versetzt. Der Abstandshalter 16 ist dabei auch zumindest teilweise vom Fügemittel 12 umgeben.

Ein jeweiliger Abstandshalter 16 ist dabei zwischen der zweiten Magnetanordnung und einem stirnseitigen Endelement 17 des Rotors 2, durch das sich die Magnettaschen nicht erstrecken, in Form einer auf das Blechpaket 5 stirnseitig aufgesetzten Endplatte angeordnet. Gemäß einem weiteren Ausführungsbeispiel ist das Endelement 17 ein stirnseitiges Endblech des Blechpakets 5.

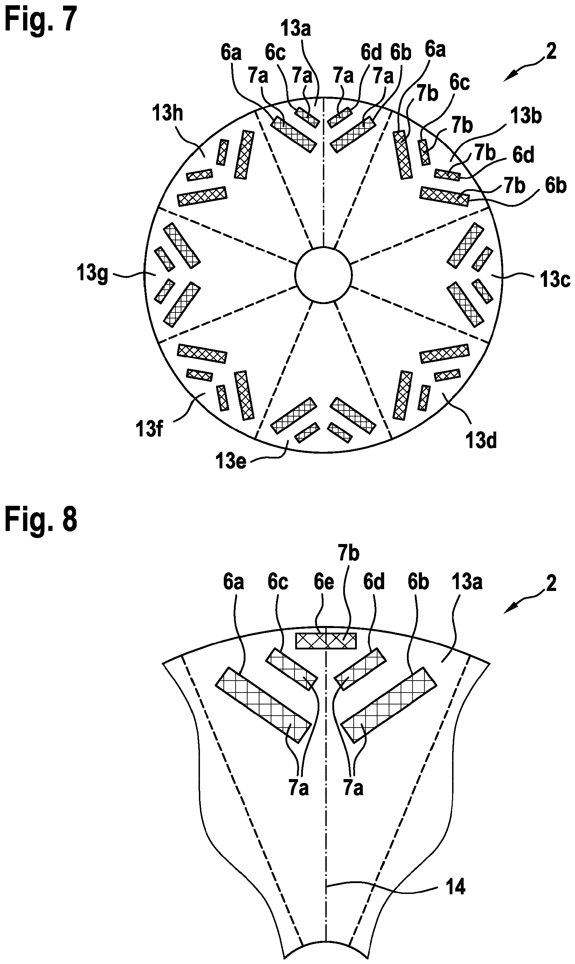

Fig. 7 ist eine stirnseitige Ansicht eines sechsten Ausführungsbeispiels eines Rotors 2.

Beim sechsten Ausführungsbeispiel sind in den Magnettaschen 6a-6d erster Magnettaschenanordnungen 13a, 13c, 13e, 13g jeweils eine erste Magnetanordnung 7a und in den Magnettaschen 6a-6d zweiter Magnettaschenanordnungen 13b, 13d, 13f, 13h jeweils eine zweite Magnetanordnung 7b anordnet. Die ersten und zweiten Magnettaschenanordnungen 13a-13h wechseln sich dabei im Umfangsrichtung ab. Im Übrigen kann das sechste Ausführungsbeispiel einem der zuvor beschriebenen Ausführungsbeispiele entsprechen.

Fig. 8 ist eine stirnseitige Ansicht einer Magnettaschenanordnung 13a eines siebten Ausführungsbeispiels eines Rotors 2.

Beim siebten Ausführungsbeispiel weist jede Magnettaschenanordnung 13a-h zusätzlich eine weitere Magnettasche 6e auf, die senkrecht auf der Trennungsebene 14 liegt und mit der ersten Magnettasche 6a und der zweiten Magnettasche 6b eine Delta-Anordnung ausbildet. Die dritte und vierte Magnettasche 6c, 6d sind in diesem Fall optional. Soweit die Verteilung der ersten und zweiten Magnetanordnungen 7a, 7b auf die erste bis vierte Magnettasche 6a-6d einem der zuvor beschriebenen Ausführungsbeispiele entspricht, kann grundsätzlich beliebig eine erste Magnetanordnung 7a oder eine zweite Magnetanordnung 7b in der weiteren Magnettasche 6e angeordnet sein.

Es ist aber auch möglich, dass bei allen Magnettaschenanordnungen 13a-h - wie in Fig. 8 gezeigt - in der ersten bis vierten Magnettasche 6a-6d eine erste Magnetanordnung 7a angeordnet ist und in der weiteren Magnettasche 6e eine zweite Magnetanordnung 7b angeordnet ist. Gemäß einem alternativen Ausführungsbeispiel sind bei allen Magnettaschenanordnungen 13a-h in der ersten bis vierten Magnettasche 6a-6d eine zweite Magnetanordnung 7a und in der weiteren Magnettasche 6e eine erste Magnetanordnung 7b angeordnet.

Im Folgenden wird ein erstes Ausführungsbeispiel eines Verfahrens zur Herstellung eines Rotors 2 gemäß Fig. 1 bis Fig. 4 beschrieben.

In einem ersten Schritt wird ein Blechpaket 5 mit mehreren sich in axialer Richtung erstreckenden Magnettaschen 6a-6d bereitgestellt.

In einem weiteren Schritt wird das Blechpaket 5 mit einer der Stirnseiten 10, 11 auf einem Werkzeug angeordnet, welches die Magnettaschen 6a-d axial und radial abdichtet.

In einem weiteren Schritt wird ein Harz als Fügemittel 12 in die Magnettaschen 6a-6d gegossen.

In einem weiteren Schritt werden Magnetelemente 8a-8e, 9a-9e innerhalb der Magnettaschen 6a-6d in axialer Richtung derart anordnet, dass mehrere permanentmagnetische Magnetanordnungen 7a, 7b ausgebildet werden, und dass sich entlang eines jeweiligen axialen Übergangsabschnitts, in welchem sich gegenüberliegende freie Enden eines Paars benachbarter Magnetelemente 8a-8e der ersten Magnetanordnungen 7a befinden, ein Magnetelement 9a-9e einer jeweiligen zweiten Magnetanordnung 7b erstreckt. Die axial äußeren Magnetelemente 8a, 9a bzw. die axial äußeren Magnetelemente 8e, 9e oder 9f liegen dabei auf dem Werkzeug auf.

In einem weiteren Schritt werden benachbarte Einzelbleche miteinander und jeweilige Magnetanordnung 7a, 7b mit den Einzelblechen durch das Fügemittel 12 stoffschlüssig verfügt.

In einem weiteren Schritt wird das Werkzeug entfernt.

Alternativ zur Verwendung des Werkzeugs kann ein Endelement 17 entsprechend Fig. 6 verwendet werden, durch welches sich keine Magnettaschen 6a-6d erstrecken und welches die die Magnettaschen 6a-6d axial und radial abdichtet. Dazu kann das Blechpaket 5 im ersten Schritt mit einem Endblech bereitgestellt werden oder es kann zusätzlich eine Endplatte, die stirnseitig an dem Blechpaket 5 angeordnet ist, bereitgestellt werden.

Im Folgenden wird ein zweites Ausführungsbeispiel eines Verfahrens zur Herstellung eines Rotors 2 gemäß Fig. 5 beschrieben.

In einem ersten Schritt wird ein Blechpaket 5 mit mehreren sich in axialer Richtung erstreckenden Magnettaschen bereitgestellt.

In einem weiteren Schritt wird das Blechpaket 5 mit einer der Stirnseiten 10, 11 auf einem Werkzeug angeordnet, welches die Magnettaschen axial und radial abdichtet.

In einem weiteren Schritt wird ein Harz als Fügemittel 12 in die Magnettaschen gegossen.

In einem weiteren Schritt werden Magnetelemente 8a-8e, 9a-9e innerhalb der Magnettaschen in axialer Richtung derart anordnet, dass mehrere permanentmagnetische Magnetanordnungen 7a, 7b ausgebildet werden und dass sich entlang eines jeweiligen axialen Übergangsabschnitts, in welchem sich gegenüberliegende freie Enden eines Paars benachbarter Magnetelemente 8a-8d der ersten Magnetanordnungen 7a befinden, ein Magnetelement 9a-9d einer jeweiligen zweiten Magnetanordnung 7b erstreckt. Die axial äußeren Magnetelemente 8a, 9a bzw. die axial äußeren Magnetelemente 8e, 9e oder 9f liegen dabei auf dem Werkzeug 15 auf. Für jede Magnettasche zum Aufnehmen einer zweiten Magnetanordnung weist das Werkzeug 15 dabei einen in die Magnettasche hineinragenden Abstandshalter 16 auf.

In einem weiteren Schritt werden benachbarte Einzelbleche miteinander und jeweilige Magnetanordnung 7a, 7b mit den Einzelblechen durch das Fügemittel 12 stoffschlüssig verfügt.

In einem weiteren Schritt wird das Werkzeug 15 samt Abstandshalter 16 entfernt.

Im Folgenden wird ein drittes Ausführungsbeispiel eines Verfahrens zur Herstellung eines Rotors 2 gemäß Fig. 6 beschrieben.

In einem ersten Schritt wird ein Blechpaket 5 mit mehreren sich in axialer Richtung erstreckenden Magnettaschen bereitgestellt, wobei das Blechpaket 5 ein Endelement 17, durch welches sich keine Magnettaschen erstrecken und welches die die Magnettaschen axial und radial abdichtet, in Form eines Endblechs aufweist. Alternativ wird zusätzlich eine Endplatte als Endelement 17 bereitgestellt, die stirnseitig an dem Blechpaket 5 angeordnet ist.

In einem weiteren Schritt wird ein Harz als Fügemittel 12 in die Magnettaschen gegossen.

In einem weiteren Schritt wird ein Abstandshalter 16 in Form eines kugelförmigen, ellipsoiden oder sonst abgerundeten Körpers in solchen Magnettaschen angeordnet, die zur Aufnahme einer zweiten Magnetanordnung 7b vorgesehen sind. Das Anordnen des Abstandshalters 16 kann alternativ vor dem Einbringen des Fügemittels 12 erfolgen.

In einem weiteren Schritt werden Magnetelemente 8a-8e, 9a-9e innerhalb der Magnettaschen in axialer Richtung derart anordnet, dass mehrere permanentmagnetische Magnetanordnungen 7a, 7b ausgebildet werden und dass sich entlang eines jeweiligen axialen Übergangsabschnitts, in welchem sich gegenüberliegende freie Enden eines Paars benachbarter Magnetelemente 8a-8d der ersten Magnetanordnungen 7a befinden, ein Magnetelement 9a-9d einer jeweiligen zweiten Magnetanordnung 7b erstreckt.

In einem weiteren Schritt werden benachbarte Einzelbleche miteinander und jeweilige Magnetanordnung 7a, 7b mit den Einzelblechen durch das Fügemittel 12 stoffschlüssig verfügt.

Gemäß weiteren Ausführungsbeispielen des Herstellungsverfahrens, die im Übrigen einem der zuvor beschriebenen Ausführungsbeispiele entsprechen, können die Magnetelemente vor dem Einbringen des Fügemittels 12 angeordnet werden.

## Patentansprüche

1. Rotor (2) für eine elektrische Maschine (1), umfassend ein Blechpaket (5), das sich in axialer Richtung erstreckende Magnettaschen (6a-6e) aufweist, mehrere erste permanentmagnetische Magnetanordnungen (7a) und mehrere zweite permanentmagnetische Magnetanordnungen (7b), wobei eine jeweilige Magnetanordnung (7a, 7b) mehrere in axialer Richtung angeordnete Magnetelemente (8a-8e, 9a-9f) umfasst, wobei in einer jeweiligen Magnettasche (6a-6e) eine der Magnetanordnungen (7a, 7e) angeordnet ist,
**dadurch gekennzeichnet, dass**
sich entlang eines jeweiligen axialen Übergangsabschnitts, in welchem sich gegenüberliegende freie Enden eines Paars benachbarter Magnetelemente (8a-8e) der ersten Magnetanordnungen (7a) befinden, ein Magnetelement (9a-9f) einer jeweiligen zweiten Magnetanordnung (7b) erstreckt.

2. Rotor nach Anspruch 1, wobei
- die axialen Längen der Magnetelemente (8a-8e) einer jeweiligen ersten Magnetanordnung (7a) gleich sind und/oder
- die Anzahl der Magnetelemente (8a-8e) einer jeweiligen ersten Magnetanordnung (7a) und die Anzahl der Magnetelemente (9a-9f) einer jeweiligen zweiten Magnetanordnung (7b) unterschiedlich, bevorzugt teilerfremd, sind.

3. Rotor nach Anspruch 1 oder 2, wobei
ein auf einer Stirnseite (10) des Blechpakets (5) befindliches axial äußeres Magnetelement (9a) einer jeweiligen zweiten Magnetanordnung (7b) eine andere axiale Länge als ein auf der Stirnseite (10) des Blechpakets (5) befindliches axial äußeres Magnetelement (8a) einer jeweiligen ersten Magnetanordnung (7a) aufweist.

4. Rotor nach Anspruch 3, wobei
die axialen Längen der übrigen Magnetelemente (9b-9e) der zweiten Magnetanordnung (7a) gleich sind.

5. Rotor nach Anspruch 3, wobei
ein auf der anderen Stirnseite (11) des Blechpakets (5) befindliches axial äußeres Magnetelement (9f) der zweiten Magnetanordnung (7b) eine andere axiale Länge als ein auf dieser Stirnseite (11) befindliches axial äußeres Magnetelement (8e) der ersten Magnetanordnung (7a) aufweist, wobei vorzugsweise vorgesehen ist, dass die axial äußeren Magnetelemente (9a, 9f) der zweiten Magnetanordnung (7b) dieselbe axiale Länge aufweisen und/oder dass die zwischen den axial äußeren Magnetelementen (9a, 9f) der zweiten Magnetanordnung (7b) befindlichen Magnetelemente (9b-9e) dieselbe axiale Länge aufweisen.

6. Rotor nach einem der Ansprüche 1 oder 2, wobei
die axialen Längen der Magnetelemente (9a-9f) einer jeweiligen zweiten Magnetanordnung (7b) gleich sind.

7. Rotor nach einem der vorhergehenden Ansprüche, wobei
eine jeweilige zweite Magnetanordnung (7b) gegenüber einer jeweiligen ersten Magnetanordnung (7a) um einen axialen Abstand versetzt ist.

8. Rotor nach Anspruch 7, welcher
ferner Abstandshalter (16) umfasst, die jeweils in einer der Magnettaschen, in welcher eine zweite Magnetanordnung (7b) angeordnet ist, angeordnet sind und den axialen Abstand realisieren.

9. Rotor nach Anspruch 8, wobei
ein jeweiliger Abstandshalter (16) zwischen der zweiten Magnetanordnung und einem stirnseitigen Endelement (17) des Rotors (2), bevorzugt einer Endplatte des Rotors (2) oder einem stirnseitigen Endblech, durch das sich die Magnettasche nicht erstreckt, des Blechpakets (5), angeordnet ist.

10. Rotor nach einem der vorhergehenden Ansprüche, wobei
die Magnettaschen (6a-6e) mehrere Magnettaschenanordnungen (13a-13h) ausbilden, wobei jede Magnettaschenanordnung (13a-13h) eine erste Magnettasche (6a) und eine zweite Magnettasche (6b) umfasst, die in einer radial nach außen geöffneten V-Form zueinander auf beiden Seiten einer Trennungsebene (14), die Schenkel der V-Form trennt und sich in radialer und axialer Richtung erstreckt, angeordnet sind.

11. Rotor nach Anspruch 10, wobei
eine jeweilige Magnettaschenanordnung (13a-13h) ferner eine dritte Magnettasche (6c) und eine vierte Magnettasche (6d) umfasst, die in einer radial nach außen geöffneten V-Form zwischen beiden Schenkeln der V-Form der ersten Magnettasche (6a) und zweiten Magnettasche (6b) anordnet sind, wobei die erste Magnettasche (6a) und die dritte Magnettasche (6c) auf einer Seite der Trennungsebene (14) und die zweite Magnettasche (6b) und die vierte Magnettasche (6d) auf der anderen Seite der Trennungsebene (14) angeordnet sind.

12. Rotor nach Anspruch 11, wobei
- in der dritten Magnettasche (6c) eine erste Magnetanordnung (7a) angeordnet ist und in der vierten Magnettasche (6d) eine zweite Magnetanordnung (7b) angeordnet ist oder
- in der dritten Magnettasche (6c) eine zweite Magnetanordnung (7b) angeordnet ist und in der vierten Magnettasche (6d) eine erste Magnetanordnung (7a) angeordnet ist.

13. Rotor nach Anspruch 11, wobei
- in der ersten Magnettasche (6a) und der zweiten Magnettasche (6b) jeweils eine erste Magnetanordnung (7a) angeordnet ist und in der dritten Magnettasche (6c) und der vierten Magnettasche (6d) jeweils eine zweite Magnetanordnung (7b) angeordnet ist oder
- in der ersten Magnettasche (6a) und der zweiten Magnettasche (6b) jeweils eine zweite Magnetanordnung (7b) angeordnet ist und in der dritten Magnettasche (6c) und der vierten Magnettasche (6d) jeweils eine erste Magnetanordnung (7a) angeordnet ist.

14. Rotor nach einem der Ansprüche 10 bis 12, wobei
- in der ersten Magnettasche (6a) eine erste Magnetanordnung (7a) angeordnet ist und in der zweiten Magnettasche (6b) eine zweite Magnetanordnung (7a) angeordnet ist oder
- in der ersten Magnettasche (6a) eine zweite Magnetanordnung (7b) angeordnet ist und in der zweiten Magnettasche (6b) eine erste Magnetanordnung (7a) angeordnet ist.

15. Rotor nach einem der vorhergehenden Ansprüche, wobei
in einer jeweiligen Magnettasche (6a-6e) ein Fügemittel (12) angeordnet ist, das die in der Magnettasche (6a-6e) angeordnete Magnetanordnung (7a, 7b) zumindest abschnittsweise umgibt und/oder sich zwischen Einzelbleche des Blechpakets (5) erstreckt, wobei das Fügemittel (12) benachbarte Einzelbleche miteinander und/oder die Magnetanordnung (7a, 7b) mit den Einzelblechen stoffschlüssig verfügt und/oder benachbarte Einzelbleche miteinander stoffschlüssig verfügt.

16. Verfahren zur Herstellung eines Rotors (2), insbesondere eines Rotors (2) nach einem der vorhergehenden Ansprüche, umfassend folgende Schritte:
- Bereitstellen eines Blechpakets (5) mit mehreren sich in axialer Richtung erstreckenden Magnettaschen (6a-6e);
- Anordnen von Magnetelementen (8a-8e, 9a-9f) innerhalb der Magnettaschen (6a-6e) in axialer Richtung derart, dass mehrere permanentmagnetische Magnetanordnungen (7a, 7b) ausgebildet werden und dass sich entlang eines jeweiligen axialen Übergangsabschnitts, in welchem sich gegenüberliegende freie Enden eines Paars benachbarter Magnetelemente (8a-8e) der ersten Magnetanordnungen (7a) befinden, ein Magnetelement (9a-9f) einer jeweiligen zweiten Magnetanordnung (7b) erstreckt.

17. Verfahren nach Anspruch 16, wobei
eine jeweilige zum Aufnehmen der zweiten Magnetanordnung (7b) vorgesehenen Magnettasche ein Abstandshalter (16) angeordnet wird, der an einer Stirnseite des Blechpakets (5) abgestützt wird, um einen axialen Versatz zwischen der ersten und der zweiten Magnetanordnung (7a, 7b) zu erzeugen.

18. Verfahren nach Anspruch 17, wobei
- ein Werkzeug (15) verwendet wird, mit welchem der Abstandshalter (16) fest verbunden ist, wobei das Werkzeug (15) die Magnettaschen (6a-6e) stirnseitig abdichtet oder
- der Abstandshalter (16) auf einem Endelement (17), durch das sich keine Magnettasche (6a-6e) erstreckt, des Rotors (2) positioniert wird, wobei vorzugsweise als Endelement (17) ein stirnseitiges Endblech des Blechpakets (5) oder eine stirnseitig auf dem Blechpaket (5) angeordnete Endplatte verwendet wird.

19. Verfahren nach einem der Ansprüche 16 bis 18, ferner umfassend folgenden Schritt:
Stoffschlüssiges Verfügen benachbarter Einzelbleche miteinander und/oder einer jeweiligen Magnetanordnung (7a, 7b) mit den Einzelblechen durch Einbringen, bevorzugt Gießen, eines Fügemittels (12), bevorzugt eines Harzes, in eine jeweilige Magnettasche (6a-6e), bevorzugt vor dem Anordnen der Magnetelemente (8a-8e, 9a-9f) in die Magnettaschen (6a-6e).

20. Elektrische Maschine (1) zum Antreiben eines Fahrzeugs, umfassend einen Stator (3) und
- einen Rotor (2) nach einem der Ansprüche 1 bis 15 oder
- einen durch ein Verfahren nach einem der Ansprüche 16 bis 19 erhalten Rotor (2),
wobei der Rotor (2) drehbar bezüglich des Stators (3) gelagert ist.
